# EUROPEAN PATENT APPLICATION

(11) **EP 1 973 290 A1**
(43) Date of publication of application: **24.09.2008**
(21) Application number: 07006102.3
(22) Date of filing: 23.03.2007
(51) Int. Cl.: H04L 29/06

(54) **Carrier selection in an IP multimedia subsystem (IMS)**

(71) Applicant: Nokia Siemens Networks GmbH & Co. KG, 81541 München (DE)
(72) Inventor: Leis, Peter, 82377 Penzberg (DE); Liebhart, Rainer, 81476 München (DE)

(57) **Abstract**

Method and device for a carrier selection in an internet protocol multimedia subsystem. The present invention provides for solutions for a call-by-call as well as for a pre-subscribed carrier selection. Further, the invention provides for a solution which does not require any changes in the session initiation protocol like for example a new SIP header or novel or changed parameters. Further, also the user equipment does not require any adoptions with respect to the carrier selection.

## Description

### FIELD OF THE INVENTION

The present invention relates to a method and a device for carrier selection, and in particular to method and a device for a carrier selection in an internet protocol multimedia subsystem (IMS).

### BACKGROUND OF THE INVENTION

Carrier selection is a known service in public switched telephone networks (PSTN), which has been established in deregulated markets. In a deregulated market a subscriber has the option before dialling the actual telephone number of a recipient to select a carrier by dialling a carrier selection code (in Germany for example 010xy). The selected carrier carries out the routing of the present call. The carrier can be individually selected before each call, depending on for example the daytime or the destination of the call. As an alternative, the subscriber may have the possibility to define a pre-subscribed or pre-selected carrier, which is intended to carry out all calls to particular destinations (for example calls to foreign countries, to distant networks or to local networks), if no explicit carrier code has been dialled by the subscriber. The individually selected carrier is also denoted as dialled carrier code or call-by-call carrier selection. A pre-subscribed carrier code in a public switched telephone network commonly is provided for example by the user profile in a local switch.

However, in the internet protocol multimedia subsystem (IMS) presently the service of carrier selection is not specified. The reason thereof is that the internet protocol multimedia subsystem is defined by 3GPP, and in mobile networks carrier selection is presently not available. Due to the adoption of an internet protocol multimedia subsystem in a fixed mobile convergence (FMC) environment and the desired use of an internet protocol multimedia subsystem as voice over internet protocol (VoIP) solution also in public switched telephone networks (according to ETSI TISPAN) and cable networks (CableLabs) it is seen as a necessity to provide a solution for carrier selection also in internet protocol multimedia systems or subsystems. In the U.S., there are requirements of the respective authorities to provide a possibility for carrier selection.

### SUMMARY OF THE INVENTION

It may be seen as an object of the invention to provide a carrier selection in internet protocol multimedia subsystems (IMS).

The present invention provides a method and device for a carrier selection in an internet protocol multimedia system of subsystem, a corresponding programme element and computer readable medium, according to the subject matter of the independent claims. Further embodiments are incorporated in the dependent claims.

According to an exemplary embodiment of the invention a method for carrier selection in an internet protocol multimedia subsystem IMS comprises receiving by a call session control function CSCF a request for a call of a user equipment UE, identifying by the call session control function CSCF a desired carrier and providing a routing information for the call to a switch of a network of the desired carrier.

This method allows a carrier selection to be carried out based on the internet protocol IP. The internet protocol multimedia subsystem coordinates a carrier selection and the provision of respective routing information so that a user equipment, for example a cell phone, a WLAN equipment or even a land line phone or DECT telephone if communicating over the internet protocol IP, may have the option to select a carrier for routing a call.

A carrier may be for example a network of a carrier as well as a virtual carrier and a virtual network, for example if the carrier does not provide a real network, but only uses particular capacities of a network of a network provider on a contract basis.

Routing information may be a session initiation protocol uniform resource identifier SIP URI or any other appropriate identifier being necessary for routing, e.g. a normal telephone number.

It should be further noted that the method according to the invention may be applied not only for calls to a public switched telephone network, but also for calls to other internet protocol multimedia subsystem as well as for calls to voice over internet protocol VoIP networks.

According to an exemplary embodiment of the invention receiving the request for a call comprises receiving a carrier identifier of the desired carrier, and identifying comprises determining the desired carrier from the received carrier identifier.

Thus, the method allows for a dialled carrier selection also denoted as call-by-call carrier selection. In this case the user individually selects a carrier by dialling a carrier identifier. The carrier identifier may be a particular individual number representing a corresponding carrier. By dialling the carrier identifier e.g. in form of a preamble or header of the sequence of numbers, the IMS receives information allowing to identify the desired carrier and to initiate the routing.

According to an exemplary embodiment of the invention identifying comprises determining a desired carrier from a user profile in a home subscriber server HSS.

The user using the user equipment may also store a user profile having included inter alia a pre-selected carrier. As a matter of fact, also a pattern or a table of carriers may be stored allocation a particular carrier with respect to the daytime and the destination, e.g. foreign countries, over sea countries etc. The IMS receives information allowing to identify the desired carrier and to initiate the routing by requesting e.g. a home subscriber server having stored the respective user profile.

According to an exemplary embodiment of the invention the method further comprises generating a telephone uniform resource identifier Tel URI based on a carrier identifier of the desired carrier and a recipient identifier of a recipient to which the requested call is to be directed.

The telephone uniform resource identifier Tel URI may also have included other information. A recipient identifier may for example a telephone number of the recipient of the call for which the carrier had been selected. The recipient identifier may have included also any other information allowing to identify the recipient, e.g. a sound file allowing to identify the recipient by speech recognition. Carrier identifier may be a carrier code of the desired carrier, but is not limited thereto. The carrier identifier may have also included any other appropriate identification information, as it is outlined above with respect to the recipient identifier.

According to an exemplary embodiment of the invention the method further comprises converting the telephone uniform resource identifier Tel URI into a session initiation protocol uniform resource identifier SIP URI based on the determined desired carrier.

Thus, the conversion of the identifiers into an internet protocol IP based format may be carried out allowing to communicate over IP, so that the carrier network may receive routing information in an standardized IP format.

According to an exemplary embodiment of the invention a user name part of the session initiation protocol uniform resource identifier (SIP URI) comprises the carrier identifier and the recipient identifier.

It should be noted that the user name part corresponds to the host identifier. The user name part may have included also other information if appropriate. By providing a predetermined format of the information, the respective information may be extracted more easily by the respective unit requiring the information to be extracted.

According to an exemplary embodiment of the invention the domain name part of the session initiation protocol uniform resource identifier SIP URI comprises a domain of the desired carrier.

This allows a communication with the carrier or in particular a server in the carrier network. The SIP URI corresponds to a unique address allowing a routing on the IP basis.

According to an exemplary embodiment of the invention the domain of the desired carrier is determined based on the carrier identifier.

The call session control function may for example initiate an identification and determination of the desired carrier by outsourcing the service or by using a look up table or any other database

According to an exemplary embodiment of the invention converting comprises providing the telephone uniform resource identifier Tel URI to a telephone number mapping ENUM and receiving the session initiation protocol uniform resource identifier SIP URI from the telephone number mapping ENUM.

The converting process may be outsourced to an ENUM via for example an interface. The CSCF may provide via the interface the carrier identifier and the recipient identifier, i.e. the Tel URI, ad receives from the ENUM the SIP URI. The address of the switch, in particular the soft switch may be obtained by a domain name server DNS.

According to an exemplary embodiment of the invention converting comprises generating a session initiation protocol uniform resource identifier (SIP URI) based on the telephone uniform resource identifier (Tel URI) and a database request to a telephone number mapping database (ENUM DB).

It should be noted that the data base request may be also carried out towards any other data base and is not limited to a telephone number mapping database.

According to an exemplary embodiment of the invention providing routing information comprises providing routing information for routing to a border gateway control function BGCF or a media gateway control function MGCF, the border gateway control function BGCF or the media gateway control function MGCF acting as a gateway to the network of the desired carrier.

Thus, the hand over of the call to a switch of the carrier network can be carried out in case the carrier does not provide for a transit point being capable of handling SIP. In this case the CSCF may forward the call to a border gateway control function BGCF, wherein the border gateway control function may route the call to a further border gateway control function or a media gateway control function MGCF.

According to an exemplary embodiment of the invention a programme element, which, when being executed by a processor, is adapted to carry out the inventive method.

According to an exemplary embodiment of the invention a computer readable medium having stored the inventive programme element.

According to an exemplary embodiment of the invention a device for carrier selection in an internet protocol multimedia subsystem IMS comprises a receiving unit being adapted to receive by a call session control function CSCF a request for a call of a user equipment UE, an identifying unit being adapted to identify by the call session control function CSCF a desired carrier and a providing unit being adapted to provide a routing information for the call to a switch of a network of the desired carrier.

According to an exemplary embodiment of the invention the identifying unit comprises a determining unit being adapted to determine a desired carrier from a user profile in a home subscriber server HSS.

According to an exemplary embodiment of the invention the device for carrier selection further comprises a generating unit being adapted to generate a telephone uniform resource identifier Tel URI based on a carrier identifier of the desired carrier and a recipient identifier of a recipient to which the requested call is to be directed, and a converting unit being adapted to convert the telephone uniform resource identifier Tel URI into a session initiation protocol uniform resource identifier SIP URI based on the determined desired carrier.

According to an exemplary embodiment of the invention the converting unit comprises an interface being adapted to provide the telephone uniform resource identifier Tel URI to a telephone number mapping ENUM and receiving the session initiation protocol uniform resource identifier SIP URI from the telephone number mapping ENUM.

According to an exemplary embodiment of the invention the converting unit comprises a generating unit being adapted to generate a session initiation protocol uniform resource identifier SIP URI based on the telephone uniform resource identifier Tel URI and a database request to a telephone number mapping database ENUM DB.

According to an exemplary embodiment of the invention the device for carrier selection further comprises a border gateway control function BGCF and/or a media gateway control function MGCF, wherein the border gateway control function BGCF or the media gateway control function MGCF are adapted to act as a gateway to the desired carrier network.

It should be noted that the described exemplary embodiments of the invention apply also for the method, the device, the computer program product and the computer readable medium.

The described embodiments may also be combined with each other without departing from the scope of the present invention.

These and other aspects of the present invention will be come apparent from and elucidated with reference to the embodiments described hereinafter.

### BRIEF DESCRIPTION OF THE DRAWINGS

Exemplary embodiments of the present invention will be described in the following with reference to the following drawings.
- Fig. 1: illustrates an exemplary embodiment of the invention for a dialled carrier code and an ENUM request;
- Fig. 2: illustrates an exemplary embodiment of the invention with a dialled carrier code and a provision of a SIP INVITE to an application server;
- Fig. 3: illustrates an exemplary embodiment of the invention with a pre-subscribed carrier code and a call session control function setting a carrier code as a preamble; and

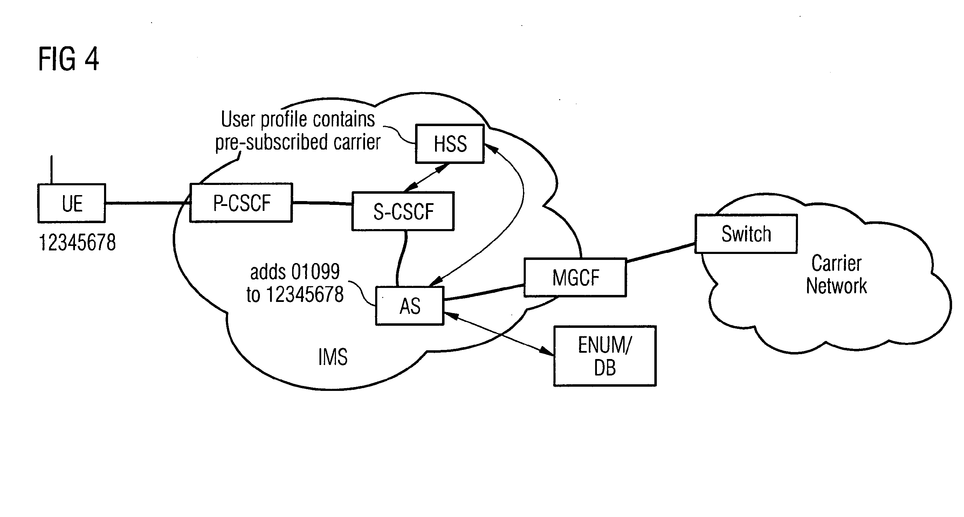

- Fig. 4: illustrates an exemplary embodiment of the invention with a pre-subscribed carrier code and a call session control function providing an SIP INVITE to an application server.

### DETAILED DESCRIPTION OF EXEMPLARY EMBODIMENTS

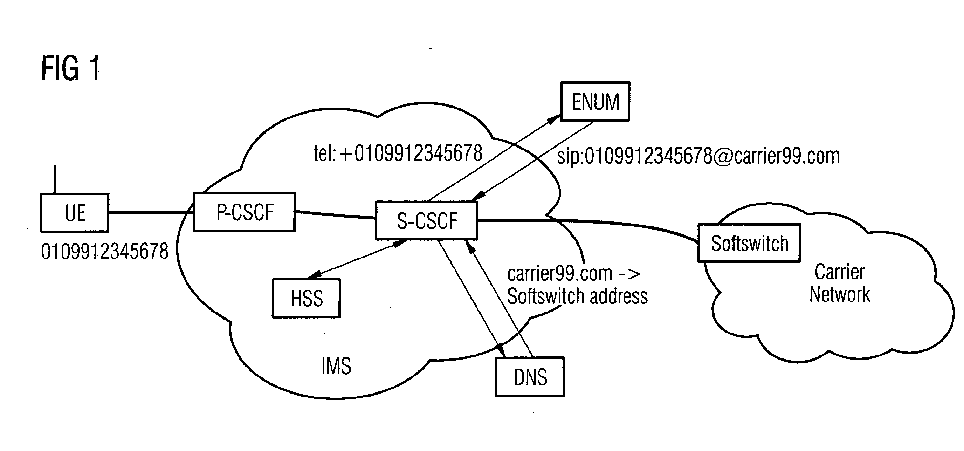

Fig. 1 illustrates an exemplary embodiment in case the subscriber dials a carrier code and a call session control function determines the carrier domain by a telephone number mapping and domain name server (ENUM/DNS).

A carrier code of a desired carrier is submitted by a user equipment as a carrier code or a carrier identifier together with the actual telephone number of the recipient as a telephone user resource identifier Tel URI to a call session control function, in particular a serving call session control function S-CSCF of a dialling subscriber. The submission may be carried out via a proxy call session control function P-CSCF. The dialling subscriber, i.e. th origin of the call will be denoted in the following with A-subscriber, wherein the recipient, i.e. the destination of the call, in the following will be denoted with B-subscriber or B-recipient. In the present embodiment, the serving call session control function may carry out a telephone number mapping and domain name server requests, as it is usual, if telephone uniform resource identifier Tel URI is available, as illustrated in Fig. 1.

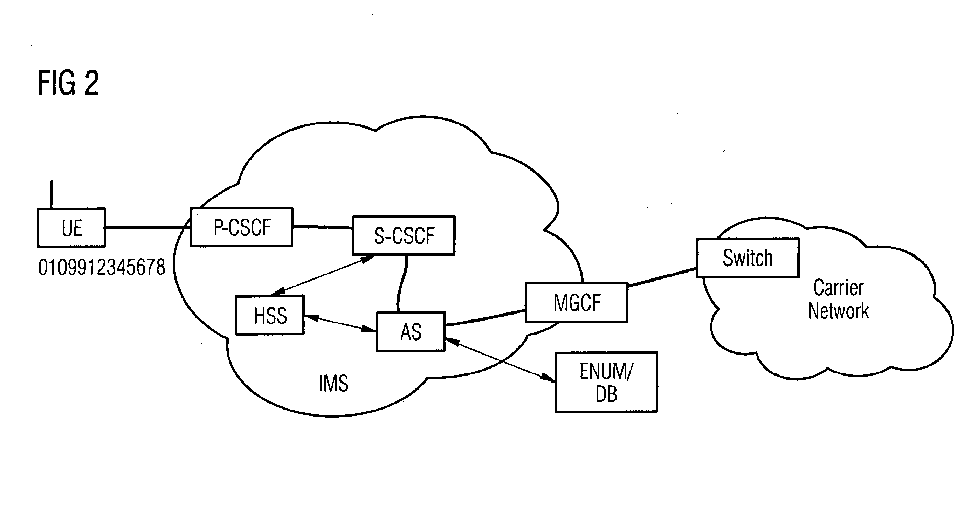

As an alternative, the call session control function may contact an application server AS, as can be seen from Fig. 2.

If the selected carrier employs an internet protocol multimedia subsystem, or at least a session initiation protocol soft switch, the telephone number mapping and domain name server shall be configured so as to convert the telephone uniform resource identifier into a session initiation protocol uniform resource identifier. The S-CSCF may provide the Tel URI to a telephone number mapper ENUM in order to receive the SIP URI from the ENUM. The username part of this SIP URI includes the originally dialled number (selective with or without carrier code), wherein the domain name part of the SIP URI represents the domain of the carrier network. As an example, the carrier code is 01099, and the telephone number is 12345678. The resulting telephone uniform resource identifier Tel URI is tel:+0109912345678. The resulting SIP URI after an ENUM/DNS request is sip:0109912345678@carrier99.com. The serving call session control function may now determine the contact point in the carrier network by means of a DNS request out of the carrier domain. This may for example be an interrogating call session control function I-CSCF, an interconnection border control function IBCF or a soft switch.

Fig. 2 illustrates an exemplary embodiment according to which the S-CSCF contacts an application server AS, e.g. a telephony application server TAS with a SIP INVITE so that the AS may initiate a routing to the MGCF and a hand over to the switch of the carrier network. If the carrier does not provide a transit point or a hand over point capable of processing SIP, the ENUM-DNS request will be without success, and the S-CSCF shall forward the call to a border gateway control function (BGCF), which, depending on the carrier code further routes to another border gateway control function (BGCF) or media gateway control function (MGCF). The MGCF then may provide the call to the switch of the carrier.

As an alternative, the corresponding session initiation protocol message, usually a session initiation protocol invite, SIP INVITE, may be provided to an internet protocol multimedia subsystem application server IMS AS, for example a telephony application server TAS, which had been introduced in the 3GPP TR 23.818. This may be supported by suitable configurations of filter criteria in the subscriber data obtained by the serving call session control function S-CSCF from the HSS when the UE registers at the S-CSCF. Filter criteria will be used in order to initiate particular services.

The application server may now analyze the Tel URI and may determine based on a simple routing table, to which network the call must be forwarded (usually directly into the network of the carrier). The application server AS or telephony application server TAS may now convert the dialled Tel URI, which Tel URI includes the carrier code, into a SIP URI, as described above. The AS or TAS then may send back the changed SIP INVITE to the S-CSCF, or provide the same to a media gateway control function MGCF or a border gateway control function BGCF respectively. The MGCF and the BGCF, respectively, may provide the call to the network of the carrier, in particular to the switch of the carrier network.

Within the network of the carrier, it must be recognized by means of the delivered carrier code or by means of a particular hand over point or transit point, that the call had been routed to the network based on a carrier selection. Then at latest, the carrier code must be removed from the dialled number including the carrier identifier and the recipient identifier, i.e. the telephone number, and a further routing may be carried out based on the telephone number as such, i.e. the recipient identifier.

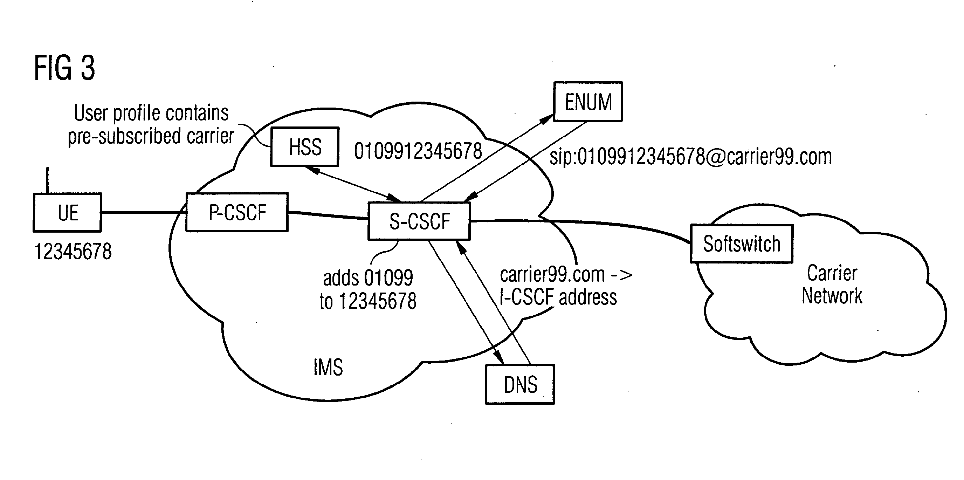

Fig. 3 describes an exemplary embodiment, in which the pre-subscribed carrier selection is illustrated, wherein the processing is implemented in the serving call session control function.

In this case, the carrier code shall be provided by the user profile in a home subscriber server (HSS), which may be provided at the registration of the subscriber as part of the subscriber data from the home subscriber server HSS to the serving call session control function S-CSCF. The A-subscriber does not have to dial a carrier identifier for using a carrier selection. The S-CSCF may carry out a telephone number mapping and domain name server request or a data base request, as it is described above with respect to Fig. 1. The application server receives the pre-subscribed carrier code from user data of e.g. a user profile, in the home subscriber server HSS.

As an alternative, the serving call session control function may directly insert the pre-subscribed carrier code in the dialled Tel URI, as it is illustrated in Fig. 3. The remaining procedure is carried out as it is described above with respect to Fig. 2.

If the A-subscriber dials a telephone number for which the pre-subscribed carrier code has to be considered, for example for calls into foreign countries or into foreign local networks, the call may be provided to an application server AS, for example a telephony application server TAS, by the S-CSCF based on suitable filter criteria. This telephony application server considers the pre-subscribed carrier for further routing of the SIP message, as it is described above.

Thus, the present invention provides for alternative methods for a carrier selection in an internet protocol multimedia subsystem. The present invention provides for solutions for a call-by-call as well as for a pre-subscribed carrier selection. Further, the invention provides for a solution which does not require any changes in the session initiation protocol like for example a new SIP header or novel or changed parameters. Further, also the user equipment does not require any adoptions with respect to the carrier selection. The user equipment for example does not have to recognize the selected carrier code and does not inform the network via signalisation. Thus, this service may be introduced by a network provider without changes at the user equipment or terminals, so that the network provider is not limited to a particular solution to be implemented in a network.

It should be noted that the term 'comprising' does not exclude other elements or steps and the 'a' or 'an' does not exclude a plurality. Also elements described in association with the different embodiments may be combined.

It should be noted that the reference signs in the claims shall not be construed as limiting the scope of the claims.

## Claims

**1.** Method for carrier selection in an internet protocol multimedia subsystem (IMS) comprising:
receiving by a call session control function (CSCF) a request for a call of a user equipment (UE);
identifying by the call session control function (CSCF) or an application server (AS) a desired carrier; and
providing a routing information for the call to a switch of a network of the desired carrier.

**2.** Method for carrier selection of claim 1, wherein receiving the request for a call comprises receiving a carrier identifier of the desired carrier, and identifying comprises determining the desired carrier from the received carrier identifier.

**3.** Method for carrier selection of claim 1, wherein identifying comprises determining a desired carrier from a user profile in a home subscriber server (HSS).

**4.** Method for carrier selection of any of claims 1 to 3, further comprising generating a telephone uniform resource identifier (Tel URI) based on a carrier identifier of the desired carrier and a recipient identifier of a recipient to which the requested call is to be directed.

**5.** Method for carrier selection of claim 4, further comprising converting the telephone uniform resource identifier (Tel URI) into a session initiation protocol uniform resource identifier (SIP URI) based on the determined desired carrier.

**7.** Method for carrier selection of claim 6, wherein a user name part of the session initiation protocol uniform resource identifier (SIP URI) comprises the carrier identifier and the recipient identifier.

**8.** Method for carrier selection of any of claims 6 and 7, wherein the domain name part of the session initiation protocol uniform resource identifier (SIP URI) comprises a domain of the desired carrier.

**9.** Method for carrier selection of claim 8, wherein the domain of the desired carrier is determined based on the carrier identifier.

**10.** Method for carrier selection of any of Claims 5, 6 and 7, wherein converting comprises providing the telephone uniform resource identifier (Tel URI) to a telephone number mapping (ENUM) and receiving the session initiation protocol uniform resource identifier (SIP URI) from the telephone number mapping (ENUM).

**11.** Method for carrier selection of any of Claims 5, 6 and 7, wherein converting comprises generating a session initiation protocol uniform resource identifier (SIP URI) based on the telephone uniform resource identifier (Tel URI) and a database request to a telephone number mapping database (ENUM DB) .

**12.** Method for carrier selection of any of claims 1 to 11, wherein providing routing information comprises providing routing information for routing to a border gateway control function (BGCF) or a media gateway control function (MGCF), the border gateway control function (BGCF) or the media gateway control function (MGCF) acting as a gateway to the switch of the network of the desired carrier.

**13.** Programme element, which, when being executed by a processor, is adapted to carry out the method of claims 1 to 12.

**14.** Computer readable medium having stored the programme element of claim 13.

**15.** Device for carrier selection in an internet protocol multimedia system (IMS) comprising:
a receiving unit being adapted to receive by a call session control function (CSCF) a request for a call of a user equipment (UE);
an identifying unit being adapted to identify by the call session control function (CSCF) a desired carrier; and
a providing unit being adapted to provide a routing information for the call to a switch of a network of the desired carrier.

**16.** Device for carrier selection of claim 15, wherein the identifying unit comprises a determining unit being adapted to determine a desired carrier from a user profile in a home subscriber server (HSS).

**17.** Device for carrier selection of any of claims 15 and 16, further comprising a generating unit being adapted to generate a telephone uniform resource identifier (Tel URI) based on a carrier identifier of the desired carrier and a recipient identifier of a recipient to which the requested call is to be directed, and a converting unit being adapted to convert the telephone uniform resource identifier (Tel URI) into a session initiation protocol uniform resource identifier (SIP URI) based on the determined desired carrier.

**18.** Device for carrier selection of Claim 17, wherein the converting unit comprises an interface being adapted to provide the telephone uniform resource identifier (Tel URI) to a telephone number mapping (ENUM) and receiving the session initiation protocol uniform resource identifier (SIP URI) from the telephone number mapping (ENUM).

**19.** Device for carrier selection of Claim 17, wherein the converting unit comprises a generating unit being adapted to generate a session initiation protocol uniform resource identifier (SIP URI) based on the telephone uniform resource identifier (Tel URI) and a database request to a telephone number mapping database (ENUM DB).

**20.** Device for carrier selection of any of claims 15 to 19, further comprising a border gateway control function (BGCF) and/or a media gateway control function (MGCF), wherein the border gateway control function (BGCF) or the media gateway control function (MGCF) are adapted to act as a gateway to the switch of the network of the desired carrier.
